# EUROPEAN PATENT APPLICATION

(11) **EP 4 660 917 A1**
(43) Date of publication of application: **10.12.2025**
(21) Application number: 24191281.5
(22) Date of filing: 26.07.2024
(51) Int. Cl.: G06Q 20/32, G06Q 20/34, H04W 12/30

(54) **MULTI-TRUSTED SERVICES MANAGER (TSM) CREDENTIAL MANAGEMENT**

(30) Priority: 07.06.2024 US 202463657729 P
(71) Applicant: Apple Inc., Cupertino, CA 95014 (US)
(72) Inventor: SUBRAMANIAN, Kartik, Cupertino, 95014 (US); SCOTT, Gordon Y., Cupertino, 95014 (US); ELRAD, Oren M., Cupertino, 95014 (US)
(74) Representative: Bateman, Samuel Alec

(57) **Abstract**

Aspects of the subject technology include receiving a selection of a digital credential at a user interface associated with the non-native application process, providing to a first server associated with the first entity a first request for provisioning a domain on a secure element of the user device, receiving an indication that a first script was provided to the secure element for the secure element to provision the domain on the secure element according to the first script, providing to a second server associated with a second entity a second request to provision the digital credential in the provisioned domain on the secure element, receiving from the second server a second script for provisioning the digital credential in the provisioned domain on the secure element, and causing the secure element to provision the digital credential in the provisioned domain on the secure element according to the second script.

## Description

### TECHNICAL FIELD

The present description generally relates to transactions using electronic devices and, more particularly, to multi-TSM (e.g., first- and/or third-party) credential management.

### BACKGROUND

Mobile payment and electronic wallets offer convenience and security by eliminating the need to carry physical payment cards, thereby reducing the risk of fraud and theft. They are becoming increasingly popular as more merchants accept mobile payments and more users seek to simplify their payment processes.

### BRIEF DESCRIPTION OF THE DRAWINGS

Certain features of the subject technology are set forth in the appended claims. However, for the purpose of explanation, several implementations of the subject technology are set forth in the following figures.
FIG. 1 illustrates an example network environment for mobile transactions, in accordance with one or more implementations.
FIG. 2 depicts an example user device that may implement the subject methods and systems, in accordance with one or more implementations.
FIG. 3 depicts an example process for onboarding a trusted service manager (TSM) associated with a second entity for use with a TSM associated with a first entity, in accordance with one or more implementations.
FIG. 4 depicts the example user device interacting with the first TSM for receiving a domain, in accordance with one or more implementations.
FIG. 5 depicts the example user device interacting with a second TSM for receiving a payment credential, in accordance with one or more implementations.
FIG. 6 depicts the example user device interacting with a payment terminal for providing a payment credential, in accordance with one or more implementations.
FIG. 7 depicts a flow diagram of an example process for provisioning a payment credential to a user device with multiple TSMs from the perspective of an application process, in accordance with one or more implementations.
FIG. 8 depicts a flow diagram of an example process for provisioning a payment credential to a user device with multiple TSMs from the perspective of a system process, in accordance with one or more implementations.
FIG. 9 depicts an example electronic system with which aspects of the present disclosure may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

Electronic wallet applications (or "digital wallets") for user devices (e.g., smartphones and tablets) are applications (or "apps") that can store payment credentials on user devices and enable users to make transactions electronically. Digital wallet apps can store multiple types of digital credentials, such as credit cards, debit cards, and gift cards, offering a convenient and quick way to conduct transactions without the need for physical cards or cash. Digital wallets not only facilitate online purchases but also support contactless payments in physical stores through technologies like near field communication (NFC), enhancing the shopping experience with speed and security. However, the convenience of digital wallets may come with its own set of challenges, such as when multiple digital wallet apps (e.g., first- and third-party digital wallet apps) are installed on a single mobile device.

Aspects of the subject technology introduce approaches for managing credentials associated with third party and/or non-native applications, such as third-party digital wallets. One or more third party and/or non-native applications may be installed on a user device. One or more of the third party and/or non-native applications on the user device may be associated with one or more credentials stored in association with the respective third party and/or non-native application. One or more of the third party and/or non-native applications on the user device may be configured to interface with a secure element of the user device, for example, to store applets and/or credentials. One or more of the third party and/or non-native applications on the user device may also be configured to interface with multiple TSMs, where separate TSMs are tasked with performing different aspects of the credential provisioning process.

One or more of the third party and/or non-native applications on the user device may also be designated as a default digital wallet application, which may be launched manually (e.g., via user input) or automatically (e.g., in response to predefined triggers). Launching the default wallet application may cause the operating system of the user device to bring the default digital wallet application to the foreground and configure one or more components of the user device to receive a digital credential from the default digital wallet application for presenting the digital credential. The subject technology provides more flexibility as to how applications may utilize the user device to manage credentials, such as payment credentials. The subject technology also provides for more efficient transmission and management of credentials when multiple digital wallets are installed on the user device.

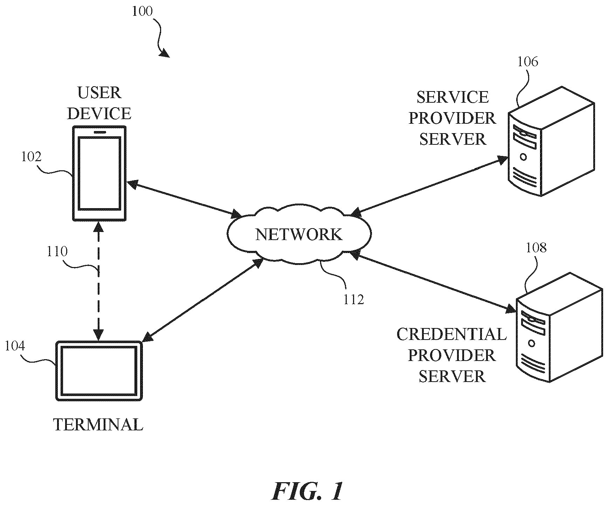

FIG. 1 illustrates an example network environment 100 for mobile transactions, in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 may include a user device 102, a terminal 104, and one or more servers (e.g., service provider server 106 and credential provider server 108). The network 112 may communicatively couple (directly or indirectly) the user device 102, terminal 104, and/or the one or more servers. In one or more implementations, the network 112 may be an interconnected network of devices that may include, or may be communicatively coupled to, the Internet. For explanatory purposes, the network environment 100 is illustrated in FIG. 1 as including the user device 102, terminal 104, and the one or more servers; however, the network environment 100 may include any number of electronic devices and/or any number of servers communicatively coupled to each other directly or via the network 112.

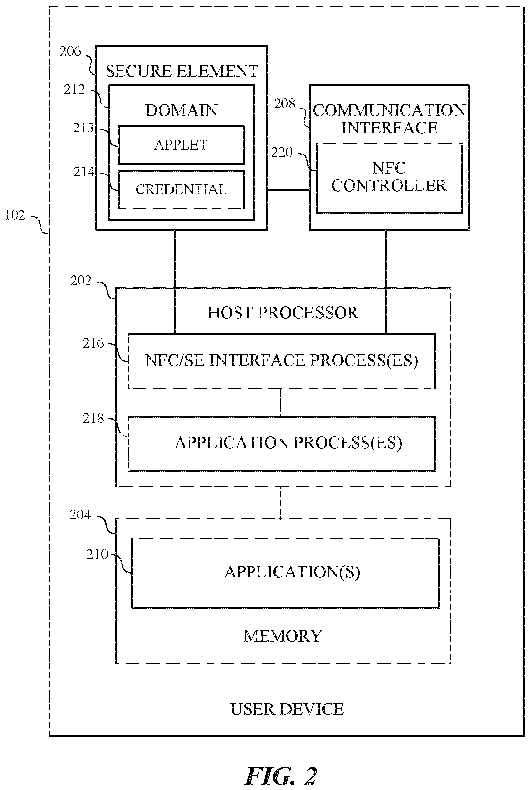

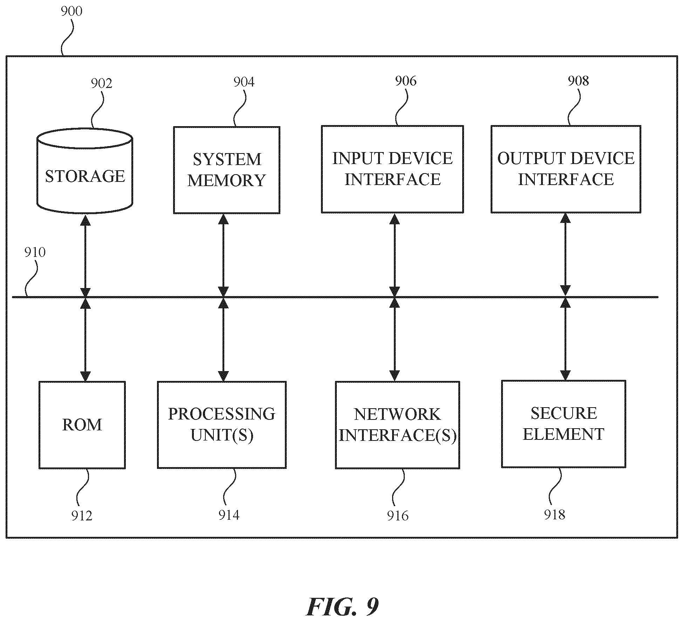

The user device 102 may be, for example, a wearable device such as a watch, a band, and the like, a desktop computer, a portable computing device such as a laptop computer, a smartphone, a peripheral device (e.g., a digital camera, headphones), a tablet device, or any other appropriate device that includes, for example, one or more wireless interfaces, such as WLAN radios, cellular radios, Bluetooth radios, Zigbee radios, NFC radios, and/or other wireless radios. In FIG. 1, by way of example, the user device 102 is depicted as a smartphone. The user device 102 may be, and/or may include all or part of, the electronic system discussed below with respect to FIG. 2 and FIG. 9.

The user device 102 may have a layered architecture that includes an operating system (OS) and one or more applications designed to run on top of it. The OS may include a variety of system level processes that, for discussion purposes herein, may be referred to generally as the OS. The OS may manage the hardware resources of the user device 102 and may provide common services for application software. The OS may act as an intermediary between applications and the physical device components, such as the CPU, memory, and secure element, enabling the creation, execution, and management of applications with which the user may interact. The OS may control hardware operations, manage software resources, and provide user interface elements, allowing the user to interact with the user device 102. The OS may include an interface layer that may include one or more system processes that allow applications installed on the user device 102 to interact with one or more hardware components. For example, the OS may include one or more NFC interface processes (e.g., API, library, etc.) that allow an application to transmit data via the NFC hardware of the user device 102 and one or more secure element (SE) interface processes (e.g., API, library, etc.) that allow an application to provision and/or present a digital credential via the SE hardware of the user device 102.

Among the applications on the user device 102, some may be or include digital wallets, which are specialized software programs designed to manage and/or present user credentials (e.g., user information, payment information, and/or the like). Digital wallets can integrate with various payment systems and/or online services, allowing users to present digital credentials efficiently without the need for physical credentials (e.g., physical gift cards, credit cards, hotel room keys, and/or the like). Digital wallets may be configured to interface with an SE of the user device 102 via one or more SE interface processes (e.g., API, library, etc.).

The terminal 104 may be a similar electronic device as described with respect to the user device 102. In FIG. 1, by way of example, the terminal 104 is depicted as a tablet. The terminal 104 may be, and/or may include all or part of, the electronic system discussed below with respect to FIG. 9. The terminal 104 may be, for example, a point-of-sale (POS) system, ATM, or public transport fare gate, configured to facilitate various forms of interactions, such as transactions, via an NFC reader. The integration of an NFC reader in the terminal 104 allows the terminal 104 to receive digital credentials from an app (e.g., digital wallet) on the user device 102 during a transaction (e.g., a financial transaction or other credential presentment). When a user device is placed near the NFC reader of a terminal, the NFC technology facilitates a secure wireless transmission of the digital credential, enabling, for example, the execution of the transaction or granting access without the need for physical cards or cash. In some implementations, the wireless transmission may include encryption to keep information exchanged between the user device 102 and the terminal 104 from being intercepted and understood by unauthorized parties. Additionally, tokenization may be used to replace sensitive data, such as credit card numbers, with a unique identifier (a "token") that has no value if compromised.

The credential provider server 108 may generate, keep, and/or provide digital credentials for or to electronic devices (e.g., the user device 102). Digital credentials may include one or more identifiers in the form of a code, a number, a data structure, a signal (e.g., an NFC signal), and/or the like. In some variations, the credential provider server 108 includes one or more app-specific modules (e.g., plugins) (and/or separate servers) that perform operations for a respective application (e.g., tokenizing and/or provisioning payment credentials). In one or more implementations, a digital credential may be generated by the credential provider server 108 and/or provided to or accessed by the user device 102. The credential provider server 108 may store account information (e.g., user account, usernames/handles, or any other account-specific data) associated with the user device 102 and/or users thereof and/or users associated therewith. The credential provider server 108 may provide digital credentials that are to be provisioned and/or stored on or at a device (e.g., the user device 102) by an application, operating system, and/or secure element of the device. Providing digital credentials to a device may include authenticating the user's identity, ensuring that the credentials are being sent to the correct device, encrypting the data to protect it during transmission, and/or the like. Once the credentials have reached the device, the credential provider server 108 may also be responsible for managing the life cycle of the credentials, such as updating, renewing, or revoking access as needed.

The service provider server 106 may prepare electronic devices (e.g., the user device 102) for receiving and/or storing (e.g., provisioning) digital credentials (e.g., from credential provider server 108). For example, the service provider server 106 may instruct the electronic device to allocate space on its secure element. The service provider server 106 may also provide one or more applets. Applets may be provisioned and stored on the secure element (e.g., in a storage volume allocated for the applet) and may be designed to, for example, interact with payment terminals to complete transactions securely. An applet may refer to a small, specialized software program designed to be executed within a secure execution environment, such as on a secure element. Applets may enable secure transactions by interacting with payment terminals and financial networks and providing secure storage and processing of payment credentials, such as credit or debit card numbers, cryptographic keys, and/or other sensitive information for authenticating payment transactions. For integrity and confidentiality of transactions, applets may leverage cryptographic algorithms for tasks such as encryption, decryption, and digital signature generation and verification. When a transaction is initiated, a payment applet corresponding to a payment credential may communicate with the payment terminal through a secure channel, authenticating the device and user, and subsequently facilitating the secure exchange of payment information. Additionally, payment applets may be dynamically manageable by service provider server 106, allowing for updates, configuration changes, or deletion by authorized entities, such as banks or payment/applet service providers, through secure, remote management protocols.

FIG. 2 depicts a user device 102 that may implement the subject methods and systems, in accordance with one or more implementations. For explanatory purposes, FIG. 2 is primarily described herein with reference to the user device 102 of FIG. 1. However, this is merely illustrative, and features of the electronic device of FIG. 2 may be implemented in any other electronic device for implementing the subject technology. Not all of the depicted components may be used in all implementations, however, and one or more implementations may include additional or different components than those shown in FIG. 2. Variations in the arrangement and type of the components may be made without departing from the spirit or scope of the claims as set forth herein. Additional components, different components, or fewer components may be provided.

The user device 102 may include one or more of a host processor 202, a memory 204, a secure element 206, and/or a communication interface 208. The host processor 202 may include suitable logic, circuitry, and/or code that enable processing data and/or controlling operations of the user device 102. In this regard, the host processor 202 may be enabled to provide control signals to various other components of the user device 102. The host processor 202 may also control transfers of data between various portions of the user device 102. The host processor 202 may further implement an operating system or may otherwise execute code to manage operations of the user device 102. The host processor 202 may also execute code to manage operations of applications 210 of the user device 102 (herein referred to as "application process(es) 218").

The memory 204 may include suitable logic, circuitry, and/or code that enable storage of various types of information such as received data, generated data, code, and/or configuration information. The memory 204 may include volatile memory (e.g., random access memory (RAM)) and/or non-volatile memory (e.g., read-only memory (ROM), flash, and/or magnetic storage). In one or more implementations, the memory 204 may store one or more applications (e.g., application 210) and data associated therewith, and any other data generated in the course of performing the processes described herein.

The secure element 206 may include hardware that provides secure storage and management of sensitive information. The secure element 206 may be securely isolated from the host processor 202 and/or operating system, making it more difficult for unauthorized access. The secure element 206 may be used for secure transactions and identification, such as in payment credentials, and the like. The secure element 206 may store sensitive information, such as cryptographic keys, and may protect the sensitive information with cryptographic algorithms and access controls. For example, the secure element 206 may include a hardware specific private key that is provisioned on the secure element 206 at or near the time of manufacture. The use of the secure element 206 provides an additional layer of security for sensitive information and helps to ensure its confidentiality in case the user device 102 is lost or compromised.

In some embodiments, the secure element 206 may include one or more domains 212. A domain 212 may be a logical partition of the resources of the secure element 206, such as its storage, processing, and/or cryptographic capabilities. Each domain 212 may include one or more applets 213, and the domain 212 may define the boundaries and/or rules for the execution of the applets 213, including the allocation of resources, memory management, and/or cryptographic services. An applet 213 may be a software component that runs in association with (e.g., within) a domain 212 of the secure element 206. An applet 213 may be responsible for managing a particular set of data, such as a credential 214, and/or provides a set of interfaces for interacting with the managed data (e.g., the credential 214). For example, the applet 213 may be responsible for storing, retrieving, and/or updating the credential 214, as well as enforcing any access controls or security policies related to the credential 214. In some embodiments, the credential 214 may also be stored in association with the domain 212.

The communication interface 208 may include suitable logic, circuitry, and/or code that enables wired or wireless communication, such as between the user device 102 and the service provider server 106. The communication interface 208 may include, for example, one or more of a Bluetooth communication interface, an NFC interface, a Zigbee communication interface, a WLAN communication interface, a USB communication interface, a cellular interface, or generally any communication interface. The NFC interface may be an NFC controller 220. The NFC controller 220 may be a microcontroller or system-on-chip (SoC) designed to facilitate wireless communication between devices in close proximity, such as within 10 cm. The NFC controller 220 may manage the transmission and reception of data between devices for secure and reliable exchange of information.

The secure element 206 and/or the communication interface 208 may be associated with one or more interface processes (e.g., drivers) that allow the host processor 202 to communicate with the secure element 206 and/or the communication interface 208 (herein referred to collectively as the "NFC/SE interface process(es) 216" or "interface process(es) 216"). Depending on the nature of the application 210, the interface process(es) 216 can establish routes for data to travel between the secure element 206, the communication interface 208, the memory 204, and/or the application 210 via one or more application processes 218 and/or system level processes. For example, if the application 210 is a wallet application, the application process 218 associated with the application 210 may be permitted to utilize the interface process 216 to direct the secure element 206 to transmit the credential 214 via the NFC controller 220. In some embodiments, an interface process 216 may be utilized to execute a script for provisioning a domain 212, an applet 213, and/or a credential 214 from one or more TSMs.

In one or more implementations, one or more of the host processor 202, the memory 204, the secure element 206, the communication interface 208, and/or one or more portions thereof may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

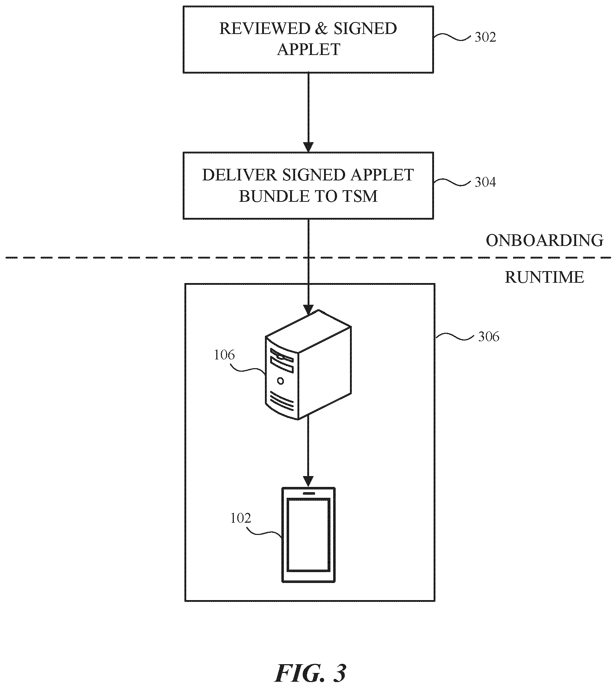

FIG. 3 depicts an example process for onboarding a TSM (e.g., the credential provider server 108) associated with a second entity for use with a TSM (e.g., the service provider server 106) associated with a first entity, in accordance with one or more implementations. The discussion of FIG. 3 may be described with reference to FIG. 2. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

When developing a digital wallet application (e.g., application 210), the application developer may be associated with a service provider server 106 that acts as a first TSM and a credential provider server 108 that acts as a second TSM. The service provider server 106 may not be affiliated with the application developer, and the service provider server 106 may be responsible for allocating space and provisioning pre-vetted applets (e.g., applet 213) onto the user device 102. In one or more implementations, the service provider server 106 may be associated with a manufacturer of the user device 102 and/or the manufacturer of the secure element 206. The credential provider server 108 may be affiliated with the application developer, and the credential provider server 108 may be responsible for provisioning payment credentials (e.g., credential 214) to the user device 102 and/or maintaining the lifecycle thereof.

To become associated with the service provider server 106, the application developer may complete an onboarding process with the service provider server 106. The application developer may create and/or license an applet 213 that securely stores and manages digital payment credentials 214. The applet 213 may be responsible for securely managing sensitive payment information on the user device 102. At block 302, the applet 213 may be packaged with any executables and/or dependencies and be provided to an independent laboratory for testing and validation. The laboratory may review the applet 213 to determine whether it meets security and/or functionality requirements. Upon successful verification, the laboratory and/or an associated entity may sign the applet 213 with a digital certificate to attest to its safety and integrity.

At block 304, the signed applet 213 may then be submitted to the service provider server 106. The entity affiliated with the service provider server 106 may review the signed applet 213 and store it in a secure repository on the service provider server 106, awaiting requests for provisioning.

At block 306, when a digital payment credential 214 is ready to be provisioned on a user device 102, the service provider server 106 may initiate the process by provisioning a domain 212, which may define the scope and parameters of the credential 214, and/or then provisioning the applet 213, which may be responsible for securely storing and managing the credential on the user device 102. Once the domain 212 and/or applet 213 have been provisioned onto the user device 102, the user device 102 may be prepared to receive the digital payment credential 214 provisioned from another TSM (e.g., the credential provider server 108), which may effectively be a personalization and/or a customization of the received applet 213.

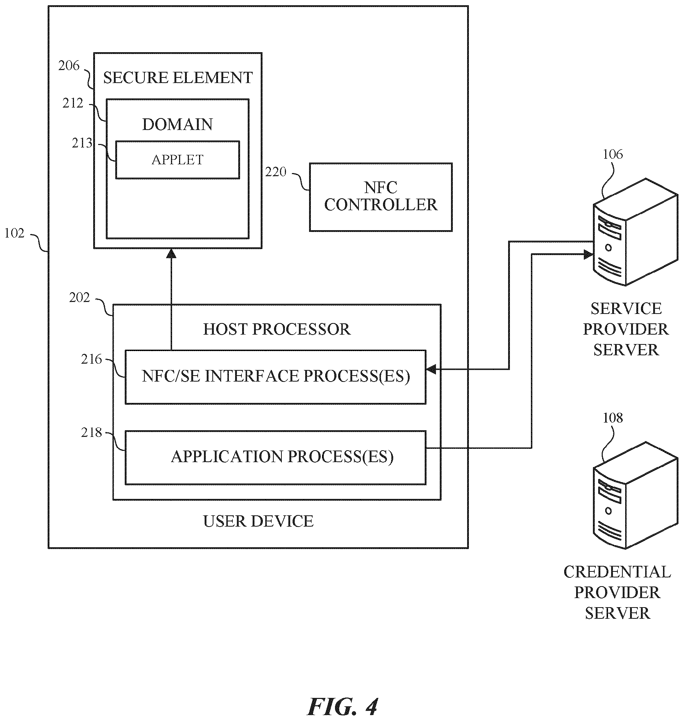

FIG. 4 depicts the user device 102 interacting with a first TSM (the service provider server 106) for receiving a script for configuring a domain 212 and/or a payment applet 213, in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

In the user device 102, third party and/or non-native applications (e.g., application 210) can expand the functionality and customization options available to users beyond what is offered by applications provided by the device manufacturer or operating system provider (also referred to as native apps). Users may have the flexibility to install multiple non-native apps that cater to a wide range of needs and preferences, including digital wallets that can manage credentials for payment systems, transportation platforms (e.g., digital car keys), hotel platforms (e.g., digital room keys), and/or the like. Non-native apps may be developed by entities independent of the device manufacturer or operating system provider (e.g., third parties) and can be sourced from, e.g., various app stores.

While third party and/or non-native apps may offer benefits in terms of user choice and developer flexibility, third party and/or non-native apps may lack the same level of vertical integration seen in first-party apps. Vertical integration may refer to the seamless integration of various services and functionalities within the ecosystem of the device's manufacturer, offering a more unified user experience and often higher performance and reliability due to the direct control over both the hardware and software aspects of the user device 102. Third party and/or non-native apps, by contrast, are developed and maintained often without coordination with the developer of the device or operating system, which can limit their access to certain hardware features or data on the user device 102, potentially affecting their performance and capabilities, but can expand their compatibility with third-party services, devices (e.g., servers), and/or the like.

Third party and/or non-native apps may interact with a plurality of remote servers (e.g., service provider server 106 and/or credential provider server 108) to provision payment credentials on the user device 102. The service provider server 106 may be a TSM that facilitates the provisioning of security domains (also referred to as "domains") and/or applets. The service provider server 106 may be associated with a first entity, which may be associated with the user device 102 and/or the operating system running thereon.

After the application 210 is launched and the user requests a new payment credential via a user interface of the application 210, the application process 218 of the application 210 may send a request to the service provider server 106 to prepare the secure element 206 to receive a payment credential. In response, the service provider server 106 may transmit or otherwise provide a script for creating a domain 212, such as a supplementary security domain (SSD), within the secure element 206. The service provider server 106 may communicate the request via one or more SE interfaces (e.g., interface processes 216) to establish a secure channel and/or manage the capabilities of the secure element 206. The SE interfaces may be standardized protocols and/or APIs specific to the user device 102 and/or its operating system.

Through the SE interfaces, the service provider server 106 may provide one or more scripts that, when executed by the secure element 206, reserve and/or partition particular resources (e.g., memory segment) of the secure element 206 so that the application process 218 has a secure location to store a payment credential. The service provider server 106 may also or instead request the memory allocation for a payment applet 213 associated with a payment credential, and the request may define the data structure, access permissions, encryption methods, and/or other parameters relating to the domain 212 and/or applet 213. By managing the allocation process, the service provider server 106 may help prevent potential conflicts between items in the secure element 206.

The allocation of resources within the secure element 206 may be achieved via script processing and/or direct command execution. With script processing, the service provider server 106 may provide a script to the secure element 206 via the SE interfaces. The script may include a set of instructions for the secure element 206 to execute. The instructions may include commands to allocate memory, create file structures, define access control rules, and/or other parameters of the secure element 206. Additionally or alternatively, the service provider server 106 may send one or more commands, which may explicitly instruct the secure element 206 to allocate memory, create files, set access control rules, and/or other parameters of the secure element 206. The commands may be part of the SE interface and/or built into the secure element 206, either or both of which may be processed by the firmware and/or operating system of the secure element 206.

Once the domain 212 is established on the secure element 206, the service provider server 106 may send a script for provisioning an applet 213 to the secure element 206. The applet 213 may be responsible for facilitating secure payment transactions with a payment credential. The applet 213 may have been provided by the entity associated with the application 210 to the service provider server 106 via the onboarding process described above with respect to FIG. 3. The application process 218 may provide to the service provider server 106 an indication of which applet to provide. The indication of the applet 213 may be a selection of a payment applet that aligns with the specific payment network or scheme associated with the payment credential to be provisioned. The service provider server 106 may transmit the selected applet 213 to the secure element 206, which the secure element 206 may install within the allocated memory of the domain 212. The installation process may involve initializing the code, data structures, and/or other configuration parameters of the applet 213.

Once the domain 212 and/or the applet 213 is established (e.g., provisioned or installed) on the secure element 206, the secure element 206 and/or the service provider server 106 may signal to the application process 218 that the secure element 206 is prepared to receive the payment credential.

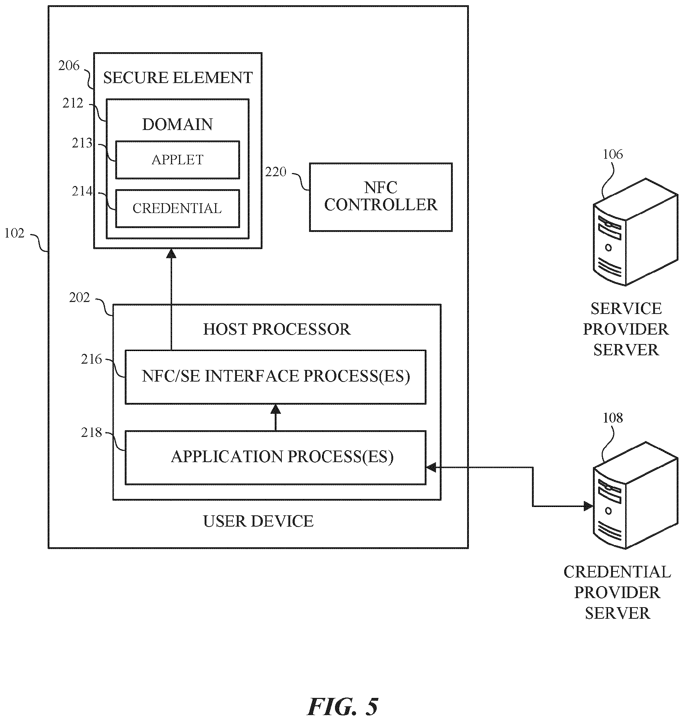

FIG. 5 depicts the user device 102 interacting with a second TSM (e.g., the credential provider server 108) for receiving a digital payment credential 214, in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

Once the domain 212 and/or the applet 213 are on the secure element 206, the application process 218 may request the digital payment credential 214 from the credential provider server 108. The request may include information such as the user's account details, card information, identifier associated with the application 210, and/or other information about the user and/or the user device 102.

After receiving the request, the credential provider server 108 may perform one or more validation checks. For example, the credential provider server 108 may verify the authenticity of the request to determine that it originates from a legitimate and trusted digital wallet application and verify the user's account status and eligibility for the payment credential. After validating the request, the credential provider server 108 may act as an intermediary between the application process 218 and the payment network and/or card issuer. For discussion purposes, and as shown in FIG. 5, the credential provider server 108 may also be the payment network and/or card issuer. Upon receiving the credential request, the payment network or card issuer may generate the digital payment credential 214. Generating the digital payment credential 214 may involve creating a unique set of data, such as a primary account number (PAN), expiration date, security code, and/or other payment credential information in the form of a token, encrypted key, or other cryptographic data structure. The digital payment credential 214 may be specifically associated with the user's account, user device 102, and/or application 210. The credential provider server 108 may provide the generated digital payment credential 214 to the application process 218. The credential provider server 108 may also provide a script that includes one or more instructions for provisioning the digital payment credential 214 on the secure element 206.

The provisioning of the digital payment credential 214 onto the secure element 206 may be achieved via script processing and/or direct command execution. With script processing, the credential provider server 108 may provide a script to the application process 218, which may provide the script to the secure element 206. The script may include a set of instructions for the application process 218 and/or secure element 206 to execute to obtain the digital credential 214. The application process 218 may provide the script to the secure element 206 by utilizing APIs and/or system services provided by the interface processes 216, which may be different than the interface processes 216 used by the service provider server 106 as described above with respect to FIG. 4 and/or tailored to the application process 218. The application process 218 may establish a secure channel with the secure element 206, authenticate the secure element 206, provide the credential 214 data in a particular format, and/or the like. The application process 218 may also handle responses from the secure element 206, such as acknowledging the successful provisioning of the credential 214 and/or handling error conditions.

The credential provider server 108 may also manage the personalization and/or maintenance processes for the digital payment credential 214. For example, the credential provider server 108 may personalize the payment applet 213 to make it unique to the user and/or the application 210 by, for example, loading encryption keys, user-specific information (e.g., user account information), and/or credentials (e.g., payment details) into the applet 213. Additionally, over time, various changes to the digital payment credential 214 may be pursued, such as updating encryption keys, modifying account parameters, or pushing security patches. The credential provider server 108 may remotely manage the credential 214, sending update commands and/or new scripts/data packages to the application process 218, which may send them to the domain 212 and/or applet 213 via the interface processes 216. Key rotations, for instance, may occur periodically to refresh encryption keys and bolster security. Similarly, account parameter changes could include updating user information, adjusting transaction limits, or modifying card details, all of which can be managed remotely by the credential provider server.

In the event of suspected fraud or device compromise, the credential provider server 108 may also block or unblock the credential 214 (e.g., by providing another script to the secure element 206), providing a rapid response to potential security threats. Similarly, when a user decides to remove a credential 214 from their digital wallet, the credential provider server 108 may securely delete the sensitive data from the secure element 206 (e.g., the domain 212, applet 213, credential 214, and/or other related data), so that the credential 214 is unusable, and initiates any corresponding account closure processes with the payment network.

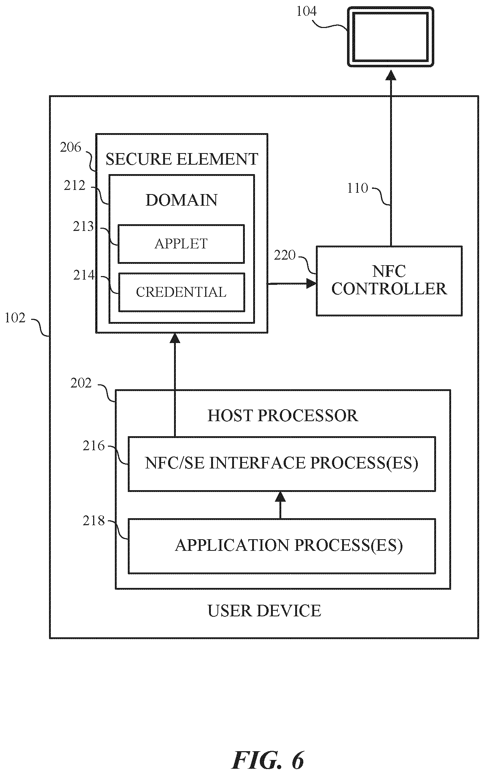

FIG. 6 depicts the user device 102 interacting with a payment terminal 104 for providing a digital payment credential 214, in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

Upon successful provisioning of the digital payment credential 214 by the credential provider server 108, the application process 218 of the application 210 may render card art associated with the digital payment credential 214. The card art may serve as a graphical representation of the digital payment credential 214. The card art may have been provided by the credential provider server 108 and may include details such as the issuing bank or payment network logo, card brand markings, and/or the like.

When a user launches the digital wallet application process 218 and selects the graphically represented digital payment credential 214 on a user interface associated with the application process 218, the application process 218 may direct the secure element 206 to present the digital payment credential 214 via an API, service, function, protocol, and/or any other communication mechanism associated with the secure element 206 offered by the interface processes 216. The application process 218 may also direct the NFC controller 220 to activate via an API, service, function, protocol, and/or any other communication mechanism associated with the NFC controller 220 offered by the interface processes 216.

The NFC controller 220 may act as a conduit, relaying the digital payment credential 214 to the terminal 104 via a wireless link 110 established between the user device 102 and the terminal 104. In some embodiments, the applet 213 may receive the request for the credential 214 from the NFC controller 220 and orchestrate the retrieval and transmission of the credential 214. The applet 213 may also encrypt the credential 214 and provide the credential to the NFC controller 220 in a format specified by the NFC controller 220.

Upon receiving the digital payment credential 214, the terminal 104, which may be a payment-enabled device at a merchant, may process the data. For example, the terminal 104 may decrypt the credential 214, verify the authenticity of the credential 214, and/or initiate a payment transaction through the appropriate payment network and financial institutions. The payment network and financial institutions may handle the authorization of the transaction, verifying sufficient funds or credit availability. Once authorized, a confirmation may be sent back to the terminal 104, concluding the payment process.

In some implementations, the application process 218 may acquire a presentment intent assertion to express an intent to perform an NFC transaction and establish a period of exclusive access to the NFC controller 220 for presenting the digital payment credential 214. The intent assertion may suppress default activities to keep them from interfering with presentment. Default activities may include launching a default application in response to detecting the terminal 104 or transmitting a digital credential in response to detecting the terminal 104. To prevent abuse of the intent assertion, the intent assertion may expire if the intent assertion is released, the application process 218 goes into the background, and/or a period of time (e.g., 15 seconds) elapses.

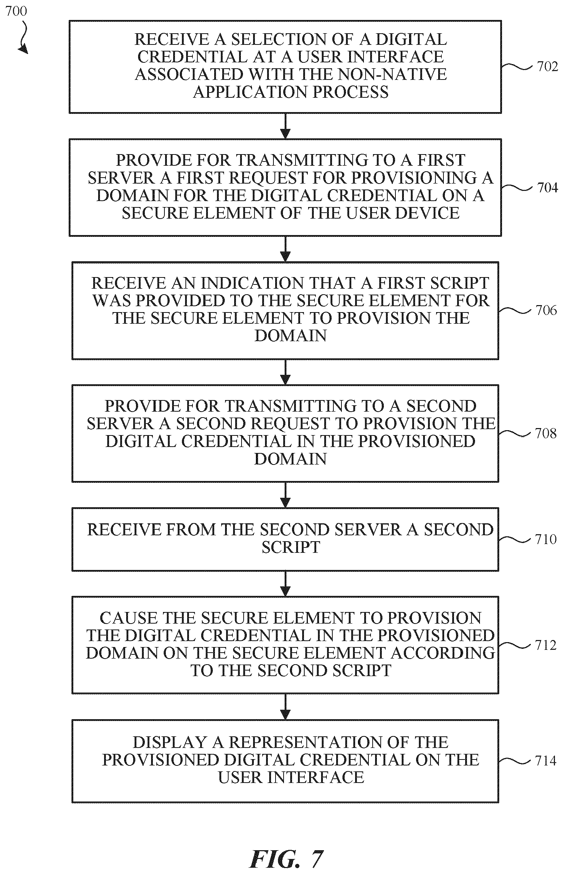

FIG. 7 depicts a flow diagram of a process 700 for provisioning a digital payment credential 214 to a user device 102 with multiple TSMs (e.g., service provider server 106 and credential provider server 108) from the perspective of an application process 218, in accordance with one or more implementations. For explanatory purposes, the process 700 is primarily described herein with reference to the user device 102, the service provider server 106, and the credential provider server 108 of FIGS. 1, 4, and 5. However, the process 700 is not limited to the user device 102, the service provider server 106, or the credential provider server 108, and one or more blocks of the process 700 may be performed by one or more other components of the user device 102, and/or by other suitable devices. Further, for explanatory purposes, the blocks of the process 700 are described herein as occurring sequentially or linearly. However, multiple blocks of the process 700 may occur in parallel. In addition, the blocks of the process 700 need not be performed in the order shown and/or one or more blocks of the process 700 need not be performed and/or can be replaced by other operations.

At block 702, the application process 218 may receive a selection of a digital credential. The application process 218 may correspond to an application 210 that is developed or maintained by an entity that is different than the entity that developed or maintained the user device 102 or the operating system running thereon. The application 210 may have been installed by a user of the user device 102 from an application store or other application repository. The application process 218 may be considered a non-native application because it is not associated with the entity that developed or maintained the user device 102 and/or its operating system and/or because the application 210 was not pre-installed on the user device 102.

The application process 218 may be a set of one or more processes running on the user device 102 that perform and manage the operations of the application 210. Operations may include rendering a user interface on the user device 102. The user interface may display one or more visual elements that may allow a user to provision a digital credential or select a digital credential for provisioning. For example, the application may be a banking application and the user interface may display one or more payment credentials associated with the user's banking account. The user may select a payment credential to initiate provisioning a digital version of the payment credential onto the user device 102. The following blocks may be performed in response to block 702.

At block 704, the application process 218 may cause a request to be transmitted to the service provider server 106. For example, the application process 218 may provide the request to a communication interface 208 (e.g., a cellular modem) to transmit to the service provider server 106. The request may be for the service provider server 106 to create a domain 212 on the secure element 206 of the user device 102.

At block 706, the application process 218 may receive an indication that a first script was provided to the secure element 206. In response to the request from block 704, the service provider server 106 may provide the first script to the secure element 206. For example, the first script may be provided by the service provider server 106 to the SE interface process 216, which then provides the first script to the secure element 206. The first script may include assets and/or instructions that, when executed by the secure element 206, may cause the secure element 206 to create and/or configure a domain 212 within the secure element 206, which may include allocating resources, such as storage volume, and establishing permissions. The domain 212 may be isolated from other domains to prevent unauthorized access, and the other domains may include their own digital credentials. The first script, the SE interface process 216, the user device 102, and/or the service provider server 106 may be associated with the same entity, which is a different entity than the entity that develops or maintains the application 210 and/or the credential provider server 108.

In some embodiments, the domain 212 may be a supplementary security domain (SSD). The application 210 may be associated with a primary security domain with an SSD corresponding to each provisioned digital credential. The primary security domain may act as a master domain with administrative privileges, while SSDs serve as subordinate domains with restricted access, dedicated to particular applications or service providers.

In some embodiments, once the domain 212 is established, the applet 213 may be installed within the domain 212. The applet 213 may be a program designed to manage and utilize the digital credential, performing tasks such as authentication and cryptographic operations. The first script may direct the secure element 206 to obtain the applet 213 from the service provider server 106. The applet 213 may be developed or maintained by an entity different from the entity that developed or maintained the user device 102. For example, the applet 213 may be developed or maintained by a card network associated with the credential to be provisioned and may have been provided to the service provider server 106 as part of an onboarding process of the credential provider server 108 and/or an entity associated therewith, such as the process described above with respect to FIG. 3.

At block 708, the application process 218 may cause a request to be transmitted to the credential provider server 108. For example, the application process 218 may provide the request to the communication interface 208 (e.g., a cellular modem) to transmit to the credential provider server 108. The request may be for the credential provider server 108 to provision a credential on the secure element 206 of the user device 102.

At block 710, the application process 218 may receive a second script from the credential provider server 108, in response to the request from block 708. The second script, the application 210, and/or the credential provider server 108 may be associated with the same entity, which is a different entity than the entity that develops or maintains the user device 102 and/or the operating system running on the user device 102. Because the second script, the application 210, and/or the credential provider server 108 may be associated with the same entity, the common entity may be able to provide more customization and/or integration between each other without having to coordinate with the other entity common to the user device 102, the operating system of the user device 102, and/or the service provider server 106.

At block 712, the application process 218 may cause the secure element 206 to provision the digital payment credential 214. The application process 218 may provide the second script to the SE interface process 216, which may then provide the second script to the secure element 206. The second script may include instructions that, when executed by the secure element 206, may cause the secure element 206 to obtain the digital payment credential 214 from the credential provider server 108. Upon obtaining the digital payment credential 214, the second script may also cause the secure element 206 to verify integrity and authenticity of the credential 214, for example, by checking digital signatures of the credential 214 against trusted certificates. Once verified, the second script may further cause the credential 214 to be securely stored in association with the applet 213 in the domain 212, which may be the allocated storage volume from block 706.

In some embodiments, the second script is provided the secure element 206 in a manner similar to the first script, described above with respect to block 706. That is, the credential provider server 108 may provide the second script to the secure element 206 via the SE interface process 216, bypassing the application process 218.

At block 714, after the credential 214 is provisioned onto the secure element 206, the application process 218 may display a representation of the provisioned digital payment credential 214 on the user interface of the application 210. When the secure element 206 obtained the credential 214 from the credential provider server 108, the secure element 206 may also have obtained an image representing the digital payment credential 214. For example, the image representing the digital payment credential 214 may be an image of a physical payment credential that corresponds to the digital payment credential 214, such as an image of a credit card. The secure element 206 may periodically communicate with the credential provider server 108, for example, to receive an update script, which may include instructions and/or assets for updating the credential. Updating the credential may include, for example, changing cryptographic keys, updating access permissions, or modifying other credential attributes.

The application process 218 may receive a user input to present the provisioned digital payment credential 214. The user input may be received via the user interface of the application 210. For example, the user may select an option on the user interface to use the digital payment credential 214 for a payment transaction at the terminal 104. The user input may indicate that the user intends to transmit the digital payment credential 214 to another device via NFC. To present the digital payment credential 214, the application process 218 may activate the NFC controller 220 of the user device 102 and cause the secure element 206 to transmit the digital payment credential 214 via the NFC controller 220. The application process 218 may communicate with the SE interface process 216, which may in turn communicate with the secure element 206, to initiate the transmission of the digital payment credential 214. The secure element 206 may retrieve the digital payment credential 214 from the domain 212 and provide it to the NFC controller 220. The NFC controller 220 may then emit an NFC signal containing the digital payment credential 214 to a nearby device, such as the terminal 104. The transmission of the digital payment credential 214 may enable the user to perform a payment transaction using the digital payment credential 214.

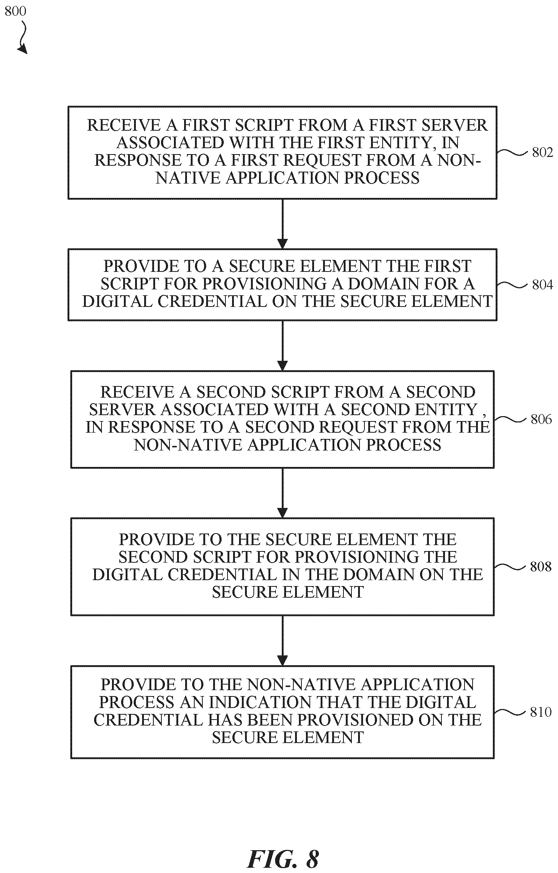

FIG. 8 depicts a flow diagram of a process 800 for provisioning a digital payment credential 214 to a user device 102 with multiple TSMs (e.g., service provider server 106 and credential provider server 108) from the perspective of a system process, such as interface process 216, in accordance with one or more implementations. For explanatory purposes, the process 800 is primarily described herein with reference to the user device 102, the service provider server 106, and the credential provider server 108 of FIGS. 1, 4, and 5. However, the process 800 is not limited to the user device 102, the service provider server 106, or the credential provider server 108, and one or more blocks of the process 800 may be performed by one or more other components of the user device 102, and/or by other suitable devices. Further, for explanatory purposes, the blocks of the process 800 are described herein as occurring sequentially or linearly. However, multiple blocks of the process 800 may occur in parallel. In addition, the blocks of the process 800 need not be performed in the order shown and/or one or more blocks of the process 800 need not be performed and/or can be replaced by other operations.

At block 802, a system process (e.g., interface process 216) may receive a first script from the service provider server 106. The system process may be associated with an operating system of the user device 102. For example, the system process may be included with and/or part of the operating system. Accordingly, the system process may be native to the user device 102. The system process may be a set of one or more processes running on the electronic device that operate as an interface between application processes (e.g., application process 218) and the secure element 206 and/or the communication interface 208.

The first script may be provided to the system process by the service provider server 106 in response to a request from the application process 218. The application process 218 may be a non-native process that is associated with an entity different from the entity that develops or maintains the first script, the system process, the user device 102, and/or the service provider server 106.

At block 804, the system process, as an interface to the secure element 206, may provide the first script to the secure element 206 for provisioning a domain 212 on the secure element 206. The first script may include assets and/or instructions that, when executed by the secure element 206, may cause the secure element 206 to allocate and/or configure a domain 212 within the secure element 206, which may include allocating resources, such as storage volume, and establishing permissions. The domain 212 may be isolated from other domains to prevent unauthorized access, and the other domains may include their own digital credentials. The first script, the system process, the user device 102, and/or the service provider server 106 may be associated with the same entity, which is a different entity than the entity that develops or maintains the application 210 and/or the credential provider server 108.

In some embodiments, the domain 212 may be an SSD. The application 210 may be associated with a primary security domain with an SSD corresponding to one or more provisioned digital credential. The primary security domain may act as a master domain with administrative privileges, while SSDs may serve as subordinate domains with restricted access, dedicated to particular applications or service providers.

In some embodiments, once the domain 212 is established, the applet 213 may be installed within the domain 212. The applet 213 may be a program designed to manage and utilize the digital credential, performing tasks such as authentication and cryptographic operations. The first script may direct the secure element 206 to obtain the applet 213 from the service provider server 106. The applet 213 may be developed or maintained by an entity different from the entity that developed or maintained the user device 102. For example, the applet 213 may be developed or maintained by a card network associated with the credential to be provisioned and may have been provided to the service provider server 106 as part of an onboarding process of the credential provider server 108 and/or an entity associated therewith.

At block 806, the system process may receive a second script from the application process 218. The application process 218 may have received the second script from the credential provider server 108 in response to a request from the application process 218 to provision a digital payment credential 214 onto the secure element 206. The second script, the application 210, and/or the credential provider server 108 may be associated with the same entity, which is a different entity than the entity that develops or maintains the user device 102 and/or the operating system running on the user device 102.

At block 808, the system process may provide the second script to the secure element 206. The second script may include instructions that, when executed by the secure element 206, may cause the secure element 206 to obtain the digital payment credential 214 from the credential provider server 108. In some embodiments, the second script may include the digital payment credential 214. Upon obtaining the digital payment credential 214, the second script may also cause the secure element 206 to verify integrity and authenticity of the credential 214, for example, by checking digital signatures of the credential 214 against trusted certificates. Once verified, the second script may further cause the credential 214 to be securely stored in association with the applet 213 in the domain 212, which may be an allocated storage volume from block 804.

At block 810, the system process may provide to the application process 218 an indication that the digital payment credential 214 has been successfully provisioned on the secure element 206. The indication may be a message that contains a confirmation code, a status flag, or any other data that indicates a successful provisioning of the digital payment credential 214. The system process may obtain the indication from the secure element 206 after the secure element 206 has executed the second script and verified and stored the digital payment credential 214. Additionally or alternatively, the system process may receive the indication from the credential provider server 108, which may communicate with the secure element 206 and confirm that the digital payment credential 214 has been provisioned. The system process may then forward the indication to the application process 218. The application process 218 may use the indication to update the user interface of the application 210 for notifying the user of the completion of the provisioning process.

The application process 218 may receive a user input to present the provisioned digital payment credential 214. The user input may be received via the user interface of the application 210. For example, the user may select an option on the user interface to use the digital payment credential 214 for a payment transaction at the terminal 104. The user input may indicate that the user intends to transmit the digital payment credential 214 to another device via NFC. To present the digital payment credential 214, the application process 218 may activate the NFC controller 220 of the user device 102 and cause the secure element 206 to transmit the digital payment credential 214 via the NFC controller 220. The application process 218 may communicate with the SE interface process 216, which may in turn communicate with the secure element 206, to initiate the transmission of the digital payment credential 214. The secure element 206 may retrieve the digital payment credential 214 from the domain 212 and provide it to the NFC controller 220. The NFC controller 220 may then emit an NFC signal containing the digital payment credential 214 to a nearby device, such as the terminal 104. The transmission of the digital payment credential 214 may enable the user to perform a payment transaction using the digital payment credential 214.

Additionally, the system process may receive an indication of a user input for presenting the provisioned digital credential. The user input may be received via the user interface of the application 210 and may indicate that the user wants to use the digital payment credential 214 for a payment transaction or another purpose. A message, signal, or other indication of the user input may be generated by the application process 218 and provided to the system process. In response to the indication of the user input, the system process may activate the NFC controller 220 of the user device 102 and cause the secure element 206 to transmit the digital payment credential 214 via the NFC controller 220. The NFC controller 220 may be a hardware component that enables the user device 102 to communicate with nearby devices (e.g., terminal 104) using NFC signals. The secure element 206 may retrieve the digital payment credential 214 from the domain 212 and provide it to the NFC controller 220. The NFC controller 220 may then emit an NFC signal containing the digital payment credential 214 to a nearby device, such as a point-of-sale terminal or another user device. The transmission of the digital payment credential 214 may enable the user to perform a payment transaction or another operation using the digital payment credential 214.

FIG. 9 depicts an electronic system 900 with which aspects of the present disclosure may be implemented, in accordance with one or more implementations. The electronic system 900 can be, and/or can be a part of, any electronic device for generating the features and processes described in reference to FIGS. 1-8, including but not limited to a laptop computer, tablet computer, smartphone, and wearable device (e.g., smartwatch, fitness band). The electronic system 900 may include various types of computer-readable media and interfaces for various other types of computer-readable media. The electronic system 900 includes a persistent storage device 902, a system memory 904 (and/or buffer), an input device interface 906, an output device interface 908, a bus 910, a ROM 912, one or more processing unit(s) 914, one or more network interface(s) 916, a secure element 918, and/or subsets and variations thereof.

The bus 910 collectively represents all system, peripheral, and chipset buses that communicatively connect the numerous internal devices of the electronic system 900. In one or more implementations, the bus 910 communicatively connects the one or more processing unit(s) 914 with the ROM 912, the system memory 904, and the persistent storage device 902. From these various memory units, the one or more processing unit(s) 914 retrieves instructions to execute and data to process in order to execute the processes of the subject disclosure. The one or more processing unit(s) 914 can be a single processor or a multi-core processor in different implementations.

The ROM 912 stores static data and instructions that are needed by the one or more processing unit(s) 914 and other modules of the electronic system 900. The persistent storage device 902, on the other hand, may be a read-and-write memory device. The persistent storage device 902 may be a non-volatile memory unit that stores instructions and data even when the electronic system 900 is off. In one or more implementations, a mass-storage device (such as a magnetic or optical disk and its corresponding disk drive) may be used as the persistent storage device 902.

In one or more implementations, a removable storage device (such as a floppy disk, flash drive, and its corresponding disk drive) may be used as the persistent storage device 902. Like the persistent storage device 902, the system memory 904 may be a read-and-write memory device. However, unlike the persistent storage device 902, the system memory 904 may be a volatile read-and-write memory, such as RAM. The system memory 904 may store any of the instructions and data that one or more processing unit(s) 914 may need at runtime. In one or more implementations, the processes of the subject disclosure are stored in the system memory 904, the persistent storage device 902, and/or the ROM 912. From these various memory units, the one or more processing unit(s) 914 retrieves instructions to execute and data to process in order to execute the processes of one or more implementations.

The bus 910 also connects to the input device interfaces 906 and output device interfaces 908. The input device interface 906 enables a user to communicate information and select commands to the electronic system 900. Input devices that may be used with the input device interface 906 may include, for example, alphanumeric keyboards, touch screens, and pointing devices. The output device interface 908 may enable the electronic system 900 to communicate information to users. For example, the output device interface 908 may provide the display of images generated by electronic system 900. Output devices that may be used with the output device interface 908 may include, for example, printers and display devices, such as a liquid crystal display (LCD), a light emitting diode (LED) display, an organic light emitting diode (OLED) display, a flexible display, a flat panel display, a solid-state display, a projector, or any other device for outputting information.

One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

The bus 910 also connects to secure element 918. The secure element 918 may include hardware and/or software that provides secure storage and management of sensitive information. The secure element 918 may be isolated from the processing unit 914 and operating system, making it more difficult for unauthorized access. The secure element 918 may be used for secure transactions and identification, such as in payment cards/credentials and digital passes. The secure element 918 may store sensitive information, such as cryptographic keys, and may protect the sensitive information (e.g., with cryptographic algorithms and access controls).

Finally, as shown in FIG. 9, the bus 910 also couples the electronic system 900 to one or more networks and/or to one or more network nodes through the one or more network interface(s) 916. In this manner, the electronic system 900 can be a part of a network of computers (such as a local area network, a wide area network, an Intranet, or a network of networks, such as the Internet). Any or all components of the electronic system 900 can be used in conjunction with the subject disclosure.

Implementations within the scope of the present disclosure can be partially or entirely realized using a tangible computer-readable storage medium (or multiple tangible computer-readable storage media of one or more types) encoding one or more computer-readable instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessors or multi-core processors that execute software, one or more implementations are performed by one or more integrated circuits, such as ASICs or FPGAs. In one or more implementations, such integrated circuits execute instructions that are stored on the circuit itself.

As described above, one aspect of the present technology is the gathering and use of data available from specific and legitimate sources for file sharing. The present disclosure contemplates that in some instances, this gathered data may include personal information data that uniquely identifies or can be used to identify a specific person. Such personal information data can include demographic data, location-based data, online identifiers, telephone numbers, email addresses, home addresses, images, videos, audio data, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, personal information data can be used for file sharing. Accordingly, the use of such personal information data may facilitate transactions (e.g., online transactions). Further, other uses for personal information data that benefit the user are also contemplated by the present disclosure. For instance, health and fitness data may be used, in accordance with the user's preferences to provide insights into their general wellness or may be used as positive feedback to individuals using technology to pursue wellness goals.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates implementations in which users selectively block the use of, or access to, personal information data. That is, the present disclosure contemplates that hardware and/or software elements can be provided to prevent or block access to such personal information data. For example, in the case of file sharing, the present technology can be configured to allow users to select to "opt-in" or "opt-out" of participation in the collection of personal information data during registration for services or anytime thereafter. In addition to providing "opt-in" and "opt-out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health-related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed implementations, the present disclosure also contemplates that the various implementations can also be implemented without the need for accessing such personal information data. That is, the various implementations of the present technology are not rendered inoperable due to the lack of all or a portion of such personal information data.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way), all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station," "receiver," "computer," "server," "processor," and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refers to only A, only B, or only C; any combination of A, B, and C; and/or at least one of each of A, B, and C.

The predicate words "configured to," "operable to," and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, one or more implementations, one or more implementations, an embodiment, the embodiment, another embodiment, one or more implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration." Any implementation described herein as "exemplary" or as an "example" is not necessarily to be construed as preferred or advantageous over other implementations. Furthermore, to the extent that the term "include," "have," or the like is used in the description or the claims, such term is intended to be inclusive in a manner similar to the term "comprise" as "comprise" is interpreted when employed as a transitional word in a claim.

All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. § 112(f), unless the element is expressly recited using the phrase "means for" or, in the case of a method claim, the element is recited using the phrase "step for."

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language claims, wherein reference to an element in the singular is not intended to mean "one and only one" unless specifically so stated, but rather "one or more." Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A method comprising:
receiving, by a non-native application process running on a user device associated with a first entity, a selection of a digital credential at a user interface associated with the non-native application process; and
responsive to the selection:
providing for transmitting, by the non-native application process and to a first server associated with the first entity, a first request for provisioning a domain for the digital credential on a secure element of the user device;
in response to the first request, receiving, by the non-native application process, an indication that a first script was provided to the secure element for the secure element to provision the domain on the secure element according to the first script;
providing for transmitting, by the non-native application process and to a second server associated with a second entity that is separate and independent from the first entity, a second request to provision the digital credential in the provisioned domain on the secure element;
in response to the second request, receiving, by the non-native application process and from the second server, a second script for provisioning the digital credential in the provisioned domain on the secure element;
causing, by the non-native application process, the secure element to provision the digital credential in the provisioned domain on the secure element according to the second script; and
displaying, by the non-native application process, a representation of the provisioned digital credential on the user interface.

2. The method of claim 1, further comprising:
receiving, by the non-native application process and via the user interface, a user input to present the provisioned digital credential;
responsive to receiving the user input to present the provisioned digital credential:
activating, by the non-native application process, an NFC controller of the user device; and
causing, by the non-native application process, the secure element to transmit the digital credential via the NFC controller.

3. The method of claim 1, wherein the domain includes an applet associated with the second entity.

4. The method of claim 1, wherein the secure element executes the first script, and executing the first script comprises allocating storage for the domain on the secure element.

5. The method of claim 4, wherein the secure element executes the second script, and executing the second script comprises provisioning the digital credential in the allocated storage on the secure element.

6. The method of claim 1, wherein the secure element includes another domain and another digital credential stored in association with the other domain.

7. The method of claim 1, wherein the domain comprises a supplementary security domain (SSD).

8. The method of claim 1, wherein the non-native application process is associated with the second entity.

9. A non-transitory machine readable medium comprising instructions that, when executed by one or more processors of a user device, cause the one or more processors to perform operations comprising:
receiving, by a non-native application process running on the user device associated with a first entity, a selection of a digital credential at a user interface associated with the non-native application process; and
responsive to the selection:
providing for transmitting, by the non-native application process and to a first server associated with the first entity, a first request for provisioning a domain for the digital credential on a secure element of the user device;
in response to the first request, receiving, by the non-native application process, an indication that a first script was provided to the secure element for the secure element to provision the domain on the secure element according to the first script;
providing for transmitting, by the non-native application process and to a second server associated with a second entity that is separate and independent from the first entity, a second request to provision the digital credential in the provisioned domain on the secure element;
in response to the second request, receiving, by the non-native application process and from the second server, a second script for provisioning the digital credential in the provisioned domain on the secure element;
causing, by the non-native application process, the secure element to provision the digital credential in the provisioned domain on the secure element according to the second script; and
displaying, by the non-native application process, a representation of the provisioned digital credential on the user interface.

10. The non-transitory machine readable medium of claim 9, wherein the instructions cause the one or more processors to perform operations further comprising:
receiving, by the non-native application process and via the user interface, a user input to present the provisioned digital credential;
responsive to receiving the user input to present the provisioned digital credential:
activating, by the non-native application process, an NFC controller of the user device; and
causing, by the non-native application process, the secure element to transmit the digital credential via the NFC controller.

11. The non-transitory machine readable medium of claim 9, wherein the domain includes an applet associated with the second entity.

12. The non-transitory machine readable medium of claim 9, wherein the secure element executes the first script, and executing the first script comprises allocating storage for the domain on the secure element.

13. A device comprising:
a memory; and
at least one processor configured to:
receive, by a non-native application process running on the device associated with a first entity, a selection of a digital credential at a user interface associated with the non-native application process; and
responsive to the selection:
provide for transmitting, by the non-native application process and to a first server associated with the first entity, a first request for provisioning a domain for the digital credential on a secure element of the device;
in response to the first request, receive, by the non-native application process, an indication that a first script was provided to the secure element for the secure element to provision the domain on the secure element according to the first script;
provide for transmitting, by the non-native application process and to a second server associated with a second entity that is separate and independent from the first entity, a second request to provision the digital credential in the provisioned domain on the secure element;
in response to the second request, receive, by the non-native application process and from the second server, a second script for provisioning the digital credential in the provisioned domain on the secure element;
cause, by the non-native application process, the secure element to provision the digital credential in the provisioned domain on the secure element according to the second script; and
display, by the non-native application process, a representation of the provisioned digital credential on the user interface.

14. The device of claim 13, wherein the at least one processor is further configured to:
receive, by the non-native application process and via the user interface, a user input to present the provisioned digital credential;
responsive to receiving the user input to present the provisioned digital credential:
activate, by the non-native application process, an NFC controller of the device; and
cause, by the non-native application process, the secure element to transmit the digital credential via the NFC controller.

15. The device of claim 13, wherein the domain includes an applet associated with the second entity.
